# FASCICULE DE BREVET EUROPEEN

(11) **EP 0 638 034 B1**
(45) Date de publication et mention de la délivrance du brevet: **06.12.1995**
(21) Numéro de dépôt: 93906657.7
(22) Date de dépôt: 24.03.1993
(51) Int. Cl.: B60T 13/567

(54) **ENSEMBLE CONSTITUE PAR UN TABLIER ET UN SERVOMOTEUR PNEUMATIQUE D'ASSISTANCE AU FREINAGE POUR VEHICULE AUTOMOBILE**
AUS DER TRENNWAND ZUM MOTORRAUM UND EINEM BREMSKRAFTVERSTÄRKER GEBILDETES AUFBAUTEIL FÜR KRAFTFAHRZEUGE
ASSEMBLY COMPRISED OF A BULKHEAD AND A PNEUMATIC BRAKE SERVO FOR A MOTOR VEHICLE

(30) Priorité: 30.04.1992 FR 9205326
(43) Date de publication de la demande: 15.02.1995
(73) Titulaire: ALLIEDSIGNAL EUROPE SERVICES TECHNIQUES, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ, Miguel, F-95100 Argenteuil (FR)
(74) Mandataire: Bentz, Jean-Paul
(86) Numéro de dépôt international: FR9300291
(87) Numéro de publication internationale: WO9322171

(56) Documents cités:
- EP-A- 0 328 759
- FR-A- 2 636 286

## Description

La présente invention concerne de manière générale les servomoteurs pneumatiques d'assistance au freinage pour véhicule automobile et, plus particulièrement, un ensemble constitué par un tablier séparant le compartiment moteur et l'habitacle du véhicule et par un servomoteur pneumatique d'assistance au freinage.

Les servomoteurs pneumatiques d'assistance au freinage pour véhicule automobile sont parfaitement connus dans l'art et leur fonctionnement ne sera pas décrit à nouveau ici. D'une manière générale, ils sont constitués par une enveloppe fermée étanche déterminant des chambres pneumatiques d'actionnement du servomoteur, cette enveloppe se terminant dans l'habitacle du véhicule par une cheminée dans laquelle pénètre une tige de commande actionnée par la pédale de frein disposée dans l'habitacle. A l'autre extrémité de l'enveloppe, on trouve le maître-cylindre conventionnel.

La fixation du servomoteur au tablier du véhicule est une opération relativement complexe. Elle s'effectue de façon habituelle par une mise en place du servomoteur par le compartiment moteur, la cheminée du servomoteur étant introduite dans un orifice pratiqué dans le tablier à cet effet. L' enveloppe du servomoteur ou des extensions de l'enveloppe porte une pluralité de vis de fixation traversant le tablier et l'on vient alors disposer des écrous sur les vis par l'habitacle. De ce fait, cette opération est difficilement robotisable et nécessite simultanément une intervention dans le compartiment moteur et une intervention dans l'habitacle. Les documents GB-A-2 017 852, GB-A-2 160 603 décrivent notamment de telles solutions de montage du servomoteur sur le tablier.

On connaît du document FR-A-2 636 286 correspondant au préambule de la revendication principale un agencement pour fixer un servomoteur pneumatique sur le tablier d'un véhicule automobile, dans lequel la cheminée du servomoteur comporte une partie de guidage tronconique et une gorge annulaire dans laquelle vient s'encliqueter un anneau de blocage élastique maintenu contre le tablier, dans l'habitacle, au moyen de plusieurs pattes de retenue.

Une telle conception nécessite également une intervention dans l'habitacle pour disposer l'anneau de blocage sur le tablier. De plus, lors du montage du servomoteur sur le tablier, il faut appliquer une force importante sur le boîtier du servomoteur pour élargir la bague de blocage, de sorte que des moulures de renfort doivent être prévues sur le tablier pour éviter de le déformer.
Il subsiste toutefois le risque de déformation du boîtier du servomoteur lui-même.

Cette conception est également dangereuse car, si le servomoteur est présenté légèrement de travers par rapport au tablier, la bague de blocage ne sera pas reçue dans la totalité de la gorge annulaire, et le servomoteur ne sera que très imparfaitement monté. De plus, même si le servomoteur est correctement monté, les formes inclinés d'un flanc latéral de la gorge annulaire et d'une face de l'anneau de blocage font que, lors d'une action de freinage, la bague de blocage est sollicitée en écartement radial, et peut même s'élargir assez pour libérer le servomoteur dans le compartiment moteur lors d'un freinage intense, ne laissant plus au conducteur que l'usage de son frein à main. Additionnellement, à chaque action de freinage, l'anneau de blocage est très fortement sollicité en cisaillement, d'où il résulte des risques non négligeables de rupture, de déformation ou de vieillissement accéléré. Enfin, si la fente permettant l'élargissement de la bague de blocage se trouve derrière une des pattes de retenue, le servomoteur est totalement indémontable du tablier.

La présente invention a pour objet d'obvier à ces inconvénients et, en particulier, d'éviter l'intervention dans l'habitacle simultanément à l'intervention dans le compartiment moteur. Elle a en outre pour objet d'économiser le temps de montage du servomoteur sur le tablier en chaîne d'assemblage du véhicule, tout en obtenant une fixation fiable du servomoteur, le démontage de ce dernier étant toujours possible.

A cet effet, la cheminée du servomoteur est solidaire d'une virole de diamètre sensiblement inférieur à celui de l'orifice pratiqué dans le tablier, et qui porte une gorge périphérique.

Selon l'invention, une bague est logée dans la gorge périphérique et comporte au moins partiellement un bord élastique faisant saillie vers l'extérieur. Ainsi lorsque le servomoteur est en position dans l'orifice, le bord élastique de la bague forme entretoise entre la face du tablier située dans l'habitacle et une paroi radiale de la gorge périphérique.

De façon avantageuse, l'extrémité de la virole située dans l'habitacle porte un filetage coopérant avec un écrou, et la paroi radiale de la gorge périphérique coopérant avec le bord élastique de la bague est formée sur l'écrou.

De la sorte, tous les éléments de fixation sont portés par le servomoteur lui-même qui forme un sous-ensemble complet, et qui peut ainsi être installé sans aucune intervention dans l'habitacle.

L'invention sera mieux comprise et d'autres buts avantages et caractéristiques de celle-ci apparaîtront plus clairement à la lecture de la description qui suit d'un mode préféré de réalisation donné à titre non limitatif en référence aux dessins sur lesquels :
- La figure 1 représente schématiquement en coupe un ensemble selon un premier mode de réalisation de l'invention constitué par un servomoteur et un tablier fixés l'un à l'autre conformément à l'invention, et
- La figure 2 représente schématiquement en perspective la bague de fixation du servomoteur au tablier selon le mode de réalisation de la figure 1.
- La figure 3 représente schématiquement en coupe un deuxième mode de réalisation de la bague de fixation ; et
- La figure 4 illustre la bague de la figure 3 dans la fixation du servomoteur au tablier.

En référence maintenant aux figures, le servomoteur 12 n'a pas été représenté dans son intégralité, car il est bien connu de l'homme du métier. Seul le mode de fixation du servomoteur au tablier a été représenté et mis en évidence. Dans le même esprit, les composants du servomoteur ne seront pas décrits ici puisqu'ils n'entrent pas en tant que tels dans le cadre de l'invention.

Le servomoteur 12 est donc essentiellement constitué par une enveloppe 13 enfermant de façon étanche un piston d'assistance 8 entraînant une tige de poussée 6 venant en appui sur le piston du maître-cylindre non représenté. L'enveloppe 13 comporte vers l'arrière une extension en forme de cheminée traversant un orifice dans le tablier. Dans cette cheminée pénétre la tige de commande 16 actionnée par une pédale de frein disposée dans l'habitacle et non représentée.

La cheminée 14 comporte une virole 18 dont le diamètre est tel qu'elle peut traverser l'orifice pratiqué dans le tablier 10. L'extrémité avant de la virole, c'est-à-dire celle qui se trouve dans le compartiment moteur lorsque le servomoteur est en position, est conformée pour présenter une paroi d'extrémité 20 parallèle au tablier 10. Dans l'exemple représenté cette virole 18 est formée, en pratique, par la cheminée de l'enveloppe 13 dont la paroi arrière 20 constitue la paroi d'extrémité de la virole. Elle est rapportée à l'intérieur du couvercle du servomoteur et comporte une partie cylindrique traversant le couvercle et le tablier 10. En d'autres mots, la virole et sa paroi d'extrémité sont solidaires de l'enveloppe du servomoteur.

La virole 18 présente une gorge périphérique 38 dans laquelle est disposée une bague 22 présentant une partie cylindrique de maintien 23 et au moins partiellement un bord élastique 24 faisant saillie vers l'extérieur.

L'extrémité de la virole 18 destinée à pénétrer dans l'habitacle du véhicule porte un filetage 26, lequel coopère avec un écrou 28 formant butée pour la bague 22, comme on le verra ci-après. Une nervure circulaire 30 définissant un épaulement d'appui pour le bord élastique 24 de la bague 22, est solidaire du tablier 10 et fait saillie dans l'habitacle de manière à former butée pour le bord élastique 24.

Un joint d'étanchéité 36 est disposé entre la face arrière de l'enveloppe du servomoteur et la face du tablier située dans le compartiment moteur. De façon avantageuse, le joint d'étanchéité 36 exerce sur la face arrière de l'enveloppe du servomoteur une force dirigée vers le compartiment moteur, c'est-à-dire dirigée dans le sens d'actionnement du servomoteur, de façon à annuler tous les jeux dûs aux tolérances de fabrication et à ne pas induire de course morte supplémentaire lors du fonctionnement du servomoteur. C'est ainsi, que comme on l'a représenté, il peut exister un interstice entre la face arrière de l'enveloppe du servomoteur et la face avant du tablier.

Enfin un système de détrompage peut être favorablement prévu pour permettre au servomoteur de ne pouvoir adopter qu'une unique position relative angulaire par rapport au tablier. Ce système de détrompage peut être, par exemple, constitué par une surface concave 34 formée dans le tablier 10 et dans laquelle pénétre une surface convexe 32 complémentaire formée sur le couvercle du servomoteur. Un tel système de détrompage est particulièrement utile lorsque le servomoteur est livré au constructeur de l'automobile déjà équipé d'un maître-cylindre, comme c'est généralement le cas. Bien entendu, la surface concave peut aussi bien être formée sur le couvercle du servomoteur pour coopérer avec une surface convexe formée sur le tablier.

Ainsi lors de la mise en place d'un servomoteur sur le tablier du véhicule, la cheminée du servomoteur est d'abord introduite par l'orifice pratiqué dans le tablier 10. Par pression dans le même sens, le bord élastique 24 de la bague est alors compressé pour traverser cet orifice. Des échancrures 25 pourront être formées dans la bague à partir du bord élastique 24 pour faciliter la compression radiale de ce bord élastique 24.
Lorsqu'il sort de l'orifice le bord élastique 24 se détend alors et vient en butée contre la nervure 30, il forme alors entretoise entre le tablier 10 et la gorge 38 et, plus particulièrement, entre le tablier et l'écrou 28. Bien évidemment, pour ce faire, ce bord élastique 24 doit être réalisé dans un matériau présentant une rigidité suffisante pour éviter un flambage du bord élastique 24 lorsqu'il est en position, et notamment lorsqu'on utilise le frein. La paroi d'extrémité 20 compresse alors le joint d'étanchéité 36, ainsi qu'on l'a expliqué plus haut.

Comme on a pu le constater le mode de fixation du servomoteur au tablier est ainsi particulièrement simple et ne nécessite pas d'intervention simultanée dans le compartiment moteur et dans l'habitacle.

De plus, si un démontage du servomoteur s'avère nécessaire, on voit bien qu'une telle opération est toujours possible en agissant sur l'écrou 28 situé dans l'habitacle. Une fois cet écrou dévissé, le servomoteur pe être extrait du tablier par le compartiment moteur, et la bague 22 peut être retirée par l'habitacle.

Le remontage du servomoteur peut être effectué comme lors du montage initial, en disposant la bague 22 dans la gorge 38, en vissant l'écrou 28 sur le filetage 26, et en insérant le servomoteur ainsi équipé dans l'orifice pratiqué dans le tablier 10.

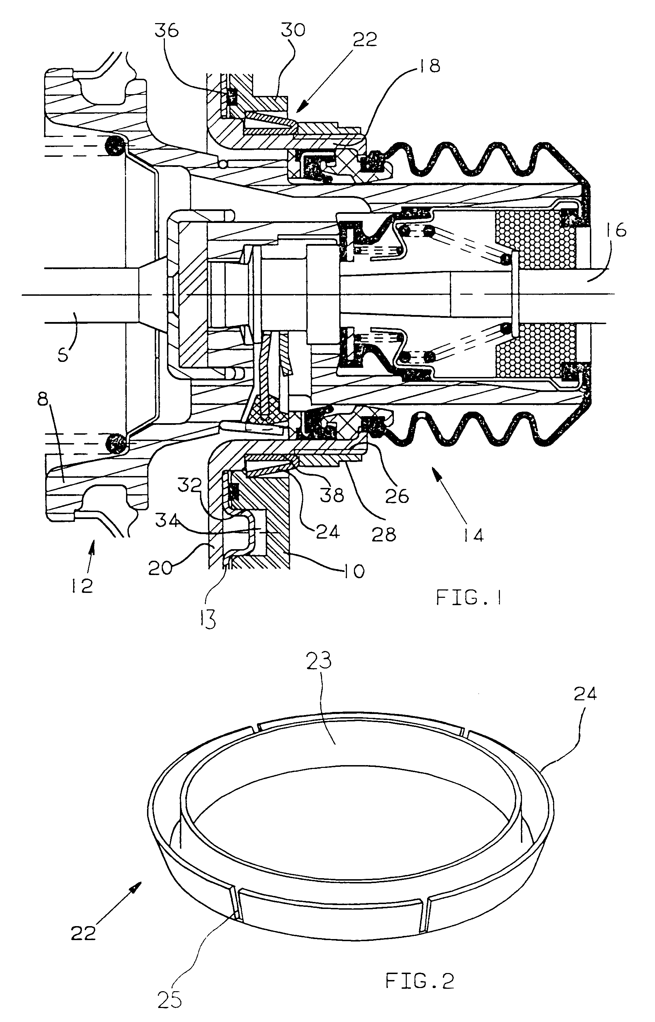

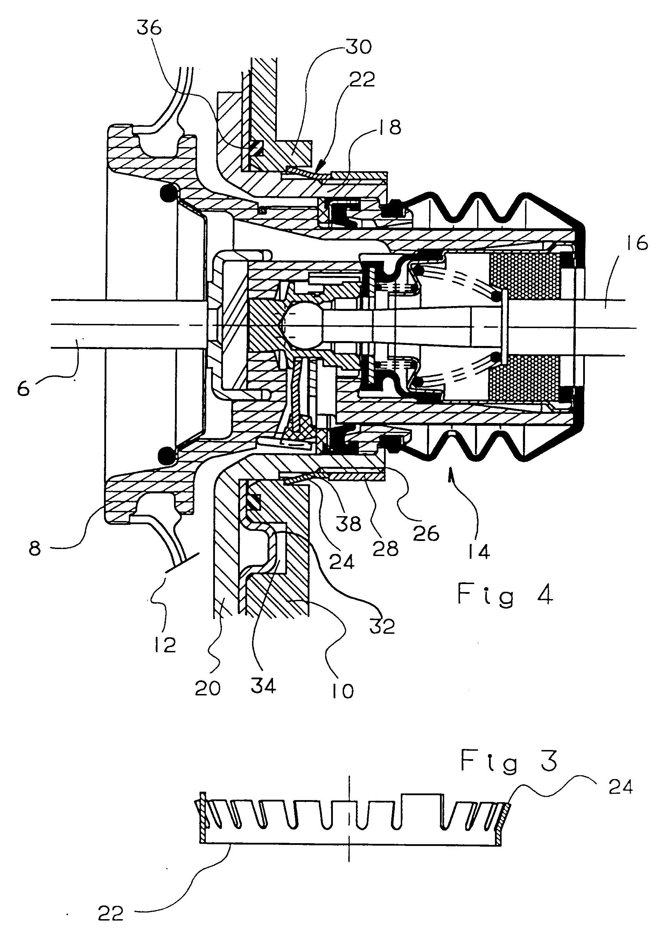

Bien que seul un mode de réalisation ait été décrit, il est évident que toute modification apportée par l'homme du métier dans le même esprit ne sortirait pas du cadre de la présente invention. Notamment la bague peut être du type représenté figure 2, mais peut être également de forme générale annulaire et comporter des découpages pour améliorer l'élasticité de son bord 24 comme représenté figures 3 et 4. Ce bord 24 peut également être réalisé en plusieurs parties périphériquement. Lorsque la virole 18 ne fait pas partie intégrante de l'enveloppe du servomoteur 12, la paroi d'extrémité 20 de cette virole peut également être réalisée en plusieurs parties périphériques.

## Revendications

1. Ensemble constitué par un tablier (10) séparant un compartiment moteur et un habitacle d'un véhicule, et par un servomoteur pneumatique (12) d'assistance au freinage du véhicule comprenant essentiellement une cheminée dans laquelle pénétre une tige de commande (16) actionnée par une pédale de frein disposée dans l'habitacle et une enveloppe close disposée dans le compartiment moteur, le tablier (10) étant percé d'un orifice prévu pour être traversé par la cheminée (14) du servomoteur, la cheminée (14) étant solidaire d'une virole (18) de diamètre sensiblement inférieur à celui de l'orifice, la virole (18) présentant une gorge périphérique (38), caractérisé en ce que une bague (22) est logée dans la gorge périphérique (38) et comporte au moins partiellement un bord élastique (24) faisant saillie vers l'extérieur, de telle manière que, lorsque le servomoteur est en position dans l'orifice, le bord élastique (24) de la bague forme entretoise entre la face du tablier (10) située dans l'habitacle et une paroi radiale de la gorge périphérique (38).

2. Ensemble selon la revendication 1, caractérisé en ce que l'extrémité de la virole (18) située dans l'habitacle porte un filetage (26) coopérant avec un écrou (28).

3. Ensemble selon la revendication 2, caractérisé en ce que la paroi radiale de la gorge périphérique (38) coopérant avec le bord élastique (24) de la bague (22) est formée sur l'écrou (28).

4. Ensemble selon la revendication 3, caractérisé en ce que la face du tablier (10) située dans l'habitacle porte au moins une nervure circulaire (30) formant butée pour le bord élastique (24).

5. Ensemble selon l'une quelconque des revendications 1 à 4, caractérisé en ce que la virole (18) présente au moins partiellement une paroi d'extrémité (20) de forme sensiblement circulaire, un joint d'étanchéité (36) étant disposé entre la paroi d'extrémité (20) et la face dudit tablier (10) située dans le compartiment moteur.

6. Ensemble selon la revendication 5, caractérisé en ce que le joint d'étanchéité (36) exerce sur la face arrière de l'enveloppe du servomoteur une force dirigée vers le compartiment moteur.

7. Ensemble selon l'une quelconque des revendications 1 à 6, caractérisé en ce qu'un système de détrompage (32, 34) est prévu entre la paroi d'extrémité (20) de la virole et le tablier (10) pour déterminer une unique position relative angulaire de fixation du servomoteur sur le tablier.

8. Ensemble selon la revendication 7, caractérisé en ce que le système de détrompage (32, 34) est constitué par une surface concave formée dans le tablier (10) ou dans une paroi du servomoteur coopérant avec une surface convexe complémentaire formée dans une paroi du servomoteur ou dans le tablier (10) respectivement.

9. Ensemble selon l'une quelconque des revendications 1 à 8, caractérisé en ce que la virole (18) est formée par l'extrémité de l'enveloppe (12) dont une paroi constitue la paroi d'extrémité (20).

## Claims

1. Assembly comprising a bulkhead (10) separating an engine compartment from a passenger compartment of a vehicle and a pneumatic booster (12) assisting the braking of the vehicle and comprising essentially a tube into which an operating rod (16) actuated by a brake pedal situated in the passenger compartment penetrates and a closed casing disposed in the engine compartment, the bulkhead (10) being provided with an opening formed for the passage of the tube (14) of the booster, the tube (14) being fastened to a collar (18) which has a diameter substantially smaller than that of the opening, the collar (18) having a peripheral groove (38), characterized in that a ring (22) is housed in the peripheral groove (38) and has, at least in part, an elastic edge (24) projecting outwards, in such a manner that, when the booster is in position in the opening, the elastic edge (24) of the ring forms a spacer between the face of the bulkhead (10) situated in the passenger compartment and a radial wall of the peripheral groove (38).

2. Assembly according to Claim 1, characterized in that end of the collar (18) which is situated in the passenger compartment is provided with a screw thread (26) interacting with a nut (28).

3. Assembly according to Claim 2, characterized in that the radial wall of the peripheral groove (38) interacting with the elastic edge (24) of the ring (22) is formed on the nut (28).

4. Assembly according to Claim 3, characterized in that face of the bulkhead (10) which is situated in the passenger compartment is provided with at least one circular rib (30) forming a stop for the elastic edge (24).

5. Assembly according to any of Claims 1 to 4, characterized in that the collar (18) has, at least partially an end wall (20) of substantially circular shape, a seal (36) being disposed between the end wall (20) and that face of the said bulkhead (10) which is situated in the engine compartment.

6. Assembly according to Claim 5, characterized in that the seal (36) exerts, on the rear face of the booster casing, a force directed towards the engine compartment.

7. Assembly according to any of Claims 1 to 6, characterized in that a foolproof positioning system (32, 34) is provided between the end wall (20) of the collar and the bulkhead (10) in order to define a single relative angular position for fastening the booster on the bulkhead.

8. Assembly according to Claim 7, characterized in that the foolproof positioning system (32, 34) consists of a concave surface formed in the bulkhead (10) or in one wall of the booster interacting with a complementary convex surface formed in one wall of the booster or in the bulkhead (10) respectively.

9. Assembly according to any of Claims 1 to 8, characterized in that the collar (18) is formed by the end of the casing 12, one wall of which constitutes the end wall (20).

## Patentansprüche

1. Baugruppe, gebildet durch eine Spritzwand (10), welche einen Motorraum und einen Innenraum eines Fahrzeugs voneinander trennt, und durch einen pneumatischen Servomotor (12) zur Unterstützung des Bremsens des Fahrzeugs, der im wesentlichen eine Durchführung, durch die eine von einem im Innenraum angeordneten Bremspedal betätigte Steuerstange (16) läuft, und ein geschlossenes Gehäuse enthält, das in dem Motorraum angeordnet ist, wobei die Spritzwand (10) von einer Öffnung durchbrochen ist, die dafür vorgesehen ist, von der Durchführung (14) des Servomotors durchquert zu werden, wobei die Durchführung (14) fest mit einem Reif (18) verbunden ist, dessen Durchmesser wesentlich geringer als derjenige der Öffnung ist, wobei der Reif (18) eine Umfangsnut (38) enthält, dadurch gekennzeichnet, daß in der Umfangsnut (38) ein Ring (22) angeordnet ist, der wenigstens teilweise einen elastischen Rand (24) aufweist, der nach außen so hervorsteht, daß dann, wenn der Servomotor in der Öffnung positioniert ist, der elastische Rand (24) des Ringes eine Brücke zwischen der in dem Innenraum liegenden Seite der Spritzwand (10) und einer radialen Wand der Umfangsnut (38) bildet.

2. Baugruppe nach Anspruch 1, dadurch gekennzeichnet, daß das in dem Innenraum liegende Ende des Reifs (18) ein mit einer Mutter (28) zusammenwirkendes Gewinde (26) aufweist.

3. Baugruppe nach Anspruch 2, dadurch gekennzeichnet, daß die radiale Wand der Umfangsnut (38), die mit dem elastischen Rand (24) des Ringes (22) zusammenwirkt, an der Mutter (28) gebildet ist.

4. Baugruppe nach Anspruch 3, dadurch gekennzeichnet, daß die in dem Innenraum liegende Seite der Spritzwand (10) wenigstens eine kreisförmige Rippe (30) trägt, welche einen Anschlag für den elastischen Rand (24) bildet.

5. Baugruppe nach einem der Ansprüche 1 bis 4, dadurch gekennzeichnet, daß der Reif (18) wenigstens teilweise eine Endwand (20) mit im wesentlichen kreisförmiger Gestalt aufweist, wobei zwischen der Endwand (20) und der in dem Motorraum liegenden Seite der Spritzwand (10) eine Dichtung (36) angeordnet ist.

6. Baugruppe nach Anspruch 5, dadurch gekennzeichnet, daß die Dichtung (36) auf die hintere Seite des Gehäuses des Servomotors eine zum Motorraum gerichtete Kraft ausübt.

7. Baugruppe nach einem der Ansprüche 1 bis 6, dadurch gekennzeichnet, daß zwischen der Endwand (20) des Reifs und der Spritzwand (10) ein Unverwechselbarkeitssystem (32, 34) vorgesehen ist, um eine eindeutige relative Winkelposition zum Befestigen des Servomotors an der Spritzwand zu bestimmen.

8. Baugruppe nach Anspruch 7, dadurch gekennzeichnet, daß das Unverwechselbarkeitssystem (32, 34) durch eine in der Spritzwand (10) oder einer Wand des Servomotors ausgebildete konkave Fläche gebildet ist, die mit einer komplementären konvexen Fläche zusammenwirkt, die in einer Wand des Servomotors bzw. der Spritzwand (10) ausgebildet ist.

9. Baugruppe nach einem der Ansprüche 1 bis 8, dadurch gekennzeichnet, daß der Reif (18) durch das Ende des Gehäuses (12) gebildet ist, von dem eine Wand die Endwand (20) bildet.
